# EUROPÄISCHE PATENTSCHRIFT

(11) **EP 3 250 416 B1**
(45) Veröffentlichungstag und Bekanntmachung des Hinweises auf die Patenterteilung: **19.05.2021**
(21) Anmeldenummer: 16700880.4
(22) Anmeldetag: 15.01.2016
(51) Int. Cl.: B60R 13/02

(54) **ANORDNUNG ZUM LÖSBAREN VERBINDEN EINES ERSTEN BAUTEILS MIT EINEM ZWEITEN BAUTEIL**
ARRANGEMENT FOR RELEASABLY CONNECTING A FIRST COMPONENT TO A SECOND COMPONENT
SYSTÈME DE LIAISON SÉPARABLE ENTRE UNE PREMIÈRE PIÈCE ET UNE DEUXIÈME PIÈCE

(30) Priorität: 28.01.2015 DE 102015201412
(43) Veröffentlichungstag der Anmeldung: 06.12.2017
(73) Patentinhaber: Volkswagen Aktiengesellschaft, 38440 Wolfsburg (DE)
(72) Erfinder: GRIMBACH, Thomas, 30161 Hannover (DE)
(86) Internationale Anmeldenummer: PCT/EP2016/050829
(87) Internationale Veröffentlichungsnummer: WO 2016/120101

(56) Entgegenhaltungen:
- WO-A1-2007/104530
- DE-A1-102004 005 963
- DE-C1- 19 636 505
- US-A- 5 513 934

## Beschreibung

Die Erfindung betrifft eine Anordnung zum lösbaren Verbinden eines ersten Bauteils mit einem zweiten Bauteil, insbesondere eines Karosseriebauteils mit einem Verkleidungsbauteil oder eines Verkleidungsbauteils mit einem anderen Verkleidungsbauteil eines Kraftfahrzeuges, nach dem Oberbegriff des Anspruches 1. Die Anordnung ist dabei mit einem Montageelement, welches am ersten Bauteil angeordnet ist, und einem Befestigungselement, welches am zweiten Bauteil angeordnet ist, ausgestaltet, wobei das Montageelement und das Befestigungselement derart ausgebildet sind, dass im zusammengebauten Zustand der Anordnung das Befestigungselement mit dem Montageelement in Wirkverbindung steht, um eine Hauptverbindung zwischen dem ersten Bauteil und dem zweiten Bauteil herzustellen. Ferner betrifft die Erfindung ein entsprechendes Verfahren zum Demontieren eines zweiten Bauteils von einem ersten Bauteil, insbesondere eines Verkleidungsbauteils von einem Karosseriebauteil oder eines Verkleidungsbauteils von einem anderen Verkleidungsbauteil eines Kraftfahrzeuges, nach dem Oberbegriff des Anspruches 16.

Grundsätzlich sind viele verschiedene Arten von Anordnungen möglich, die dazu dienen können, zwei Bauteile miteinander zu verbinden. Die lösbaren Verbindungen zeichnen sich dadurch aus, dass sie sich durch Umkehr des Verbindungsvorganges wieder trennen lassen. Die lösbaren Verbindungen werden oft form- und/oder kraftschlüssig hergestellt. Formschlüssige Verbindungen entstehen durch das Ineinandergreifen von mindestens zwei Verbindungspartnern, die im Sinne der vorliegenden Erfindung als ein Montageelement und ein Befestigungselement bezeichnet werden. Durch das Herstellen einer Hauptverbindung zwischen den Verbindungspartnern können sie sich ohne eine Krafteinwirkung nicht mehr voneinander lösen. Dabei stehen die Verbindungspartner, das Montageelement und das Befestigungselement, einander im Weg. Bei Belastung wirken meistens rechtwinklige Kräfte zwischen den Berührungsflächen der Verbindungspartner, die ein Lösen der Hauptverbindung mindestens in eine Richtung verhindern. Meistens wird zum Verbinden von zwei Bauteilen, eines ersten Bauteils mit einem zweiten Bauteil, ein zweites Paar an Verbindungspartnern vorgesehen, welches ein Lösen der Hauptverbindung auch in die Gegenrichtung sperrt. Bei vielen Verbindungen kommt es in der Regel vor, dass sie sowohl form- als auch kraftschlüssig realisiert werden. Kraftschlüssige Verbindungen zeichnen sich durch eine orthogonale Kraft aus, die auf die miteinander zu verbindenden Flächen der Verbindungspartner wirkt. Ihre gegenseitige Verschiebung ist verhindert, solange die durch die Haftreibung bewirkte Gegenkraft nicht überschritten wird. Eine Hauptverbindung mittels eines Schnapphakens und eines dem Schnapphaken komplementären Rastelementes ist ein Beispiel für eine form- und/oder kraftschlüssige Verbindung von zwei Bauteilen.

Eine beispielhafte Anordnung ist in einer Druckschrift US 5,513,934 gezeigt.

Bei den herkömmlichen Anordnungen hat sich jedoch als Nachteil herausgestellt, dass sie sich zu Demontage-, Austausch- oder Wartungszwecken der Bauteile nur mit viel Mühe lösen lassen. Hierzu muss das zweite Bauteil meistens sehr umständlich, beispielsweise durch Einführen von Werkzeugen zwischen das erste und das zweite Bauteil, angehoben werden und mit Einwirkung von Kraft vom ersten Bauteil weggezogen werden. Diese Kraft lässt sich nicht immer leicht anbringen, da das Werkzeug oft nur unter einem unbequemen Winkel zwischen die Bauteile eingeführt werden kann. Außerdem ist es unter solchen Umständen schwierig, diese Kraft optimal in die orthogonale Richtung zu den Berührungsflächen der Verbindungspartner anzulegen und diese Kraft zudem so lange zu halten, bis das zweite Bauteil vom ersten Bauteil gelöst und abgezogen werden kann. Dabei entsteht außerdem die Gefahr, dass die Verbindungspartner, das Montageelement und das Befestigungselement, die meist aus flexiblen bzw. elastischen Materialien ausgeführt sind und filigrane Konturen aufweisen, bei der Demontage des zweiten Bauteils vom ersten Bauteil leicht beschädigt werden können, so dass der Zusammenbau der beiden Bauteile nicht mehr möglich wird.

Der Erfindung liegt daher die objektive Aufgabe zugrunde, mindestens einen aus dem Stand der Technik bekannten Nachteil zumindest zum Teil zu überwinden. Insbesondere ist es die Aufgabe der vorliegenden Erfindung, eine Anordnung zum lösbaren Verbinden eines ersten Bauteils mit einem zweiten Bauteil, insbesondere eines Karosseriebauteils mit einem Verkleidungsbauteil eines Kraftfahrzeuges oder eines Verkleidungsbauteils mit einem anderen Verkleidungsbauteil, bereitzustellen, welche einfach zu realisieren ist, welche nur solche Elemente und Mittel aufweist, die einfach und kostengünstig hergestellt werden können, welche einfach in der Montage ist, ein einfaches sowie schonendes Lösen der Bauteile zur Demontage, Austausch- oder Reparaturzwecken ermöglicht und welche ein Zusammenbauen der Bauteile jederzeit wieder sicherstellt.

Die Erfindung stellt hierbei eine Anordnung zum lösbaren Verbinden eines ersten Bauteils mit einem zweiten Bauteil, insbesondere eines Karosseriebauteils mit einem Verkleidungsbauteil eines Kraftfahrzeuges oder eines Verkleidungsbauteils mit einem anderen Verkleidungsbauteil, bereit, die mit einem Montageelement, welches am ersten Bauteil angeordnet ist, und einem Befestigungselement, welches am zweiten Bauteil angeordnet ist, ausgestaltet ist, wobei das Montageelement und das Befestigungselement derart ausgebildet sind, dass im zusammengebauten Zustand der Anordnung das Befestigungselement mit dem Montageelement in Wirkverbindung steht, um eine Hauptverbindung zwischen dem ersten Bauteil und dem zweiten Bauteil herzustellen. Dabei ist es erfindungsgemäß vorgesehen, dass das Montageelement ein Demontagemittel und das Befestigungselement ein dem Demontagemittel komplementäres Führungsmittel aufweist, wobei das Demontagemittel und das Führungsmittel derart ausgebildet sind, dass im zusammengebauten Zustand der Anordnung das Demontagemittel vom Führungsmittel beabstandet ist, und dass das Demontagemittel mit dem Führungsmittel, insbesondere nur dann, in Wirkverbindung bringbar ist, um eine Hilfsverbindung zwischen dem ersten Bauteil und dem zweiten Bauteil herzustellen, und um das Lösen der Hauptverbindung zwischen dem ersten Bauteil und dem zweiten Bauteil zu erleichtern.

Der Erfindungsgedanke liegt dabei darin, dass die Hilfsverbindung zwischen dem ersten Bauteil und dem zweiten Bauteil, insbesondere nur dann, hergestellt wird, wenn das Lösen der Hauptverbindung erwünscht ist. In allen anderen Fällen, insbesondere im zusammengebauten Zustand der Anordnung bzw. in einem betriebsgemäßen Gebrauch der Anordnung, ist die Hilfsverbindung inaktiv. Die Hilfsverbindung dient gemäß der Erfindung, insbesondere ausschließlich, dazu, um das Lösen der Hauptverbindung zwischen dem ersten Bauteil und dem zweiten Bauteil zu erleichtern. Hierzu schafft die Hilfsverbindung die Möglichkeit, die Verbindungspartner auf Abstand zueinander zu bringen, die die Hauptverbindung realisieren, und auf Abstand zueinander zu halten, solange das zweite Bauteil vom ersten Bauteil entfernt wird. Die Verbindungspartner im Sinne der vorliegenden Erfindung sind das Montageelement und das Befestigungselement. Vorteilhafterweise kann die Hilfsverbindung außerdem helfen, dass das zweite Bauteil vom ersten Bauteil geführt abgezogen werden kann, ohne dass eine Einwirkung von Kräften auf die oder zwischen die Bauteile notwendig ist, welche Kräfte nur aus unbequemen Winkeln angelegt werden können.

Gemäß der Erfindung dient die Hilfsverbindung vorteilhafterweise dazu, die Hauptverbindung zu entlasten und zu verhindern, dass während des Abziehens des zweiten Bauteils vom ersten Bauteil die beiden Verbindungspartner aufeinander zuschnappen können. Die Hilfsverbindung hilft dabei so lange die Verbindungspartner auf Abstand zu halten, bis das zweite Bauteil vom ersten Bauteil so weit entfernt ist, dass ein Zuschnappen der Verbindungspartner die zwei Bauteile nicht mehr im Rahmen der Hauptverbindung verbinden kann. Erfindungsgemäß wird die Hilfsverbindung zwischen den Bauteilen dann ebenfalls, vorteilhafterweise automatisch, aufgehoben, wenn der Abstand erreicht ist, bei dem das Zuschnappen der Verbindungspartner nicht mehr zum Herstellen der Hauptverbindung führen kann. Die beiden Bauteile und die Verbindungspartner, insbesondere das Montageelement und das Befestigungselement, bleiben beim Lösen der Hauptverbindung vorteilhafterweise durch die Hilfsverbindung von der Einwirkung von ungünstigen Seitenkräften, die die Bauteile bei den herkömmlichen Anordnungen auseinander halten müssen, komplett verschont. Somit kann der Nachteil der herkömmlichen Anordnungen überwunden werden, dass die beiden Bauteile meistens zu lange und nur aus einem ungünstigen Winkel auseinander gedrückt werden müssen, bis die Bauteile so weit voneinander entfernt wurden, dass ein Zuschnappen der Verbindungspartner die zwei Bauteile nicht mehr verbinden kann. Folglich kann auch der Nachteil überwunden werden, dass die beiden Bauteile bei der Demontage der herkömmlichen Anordnungen beschädigt werden können.

Folglich sorgt die Erfindung dafür, dass das Lösen der Hauptverbindung einfach und schonend für die Bauteile erfolgen kann. Danach ist ein erneutes Herstellen der Hauptverbindung jederzeit wieder möglich, da das Montageelement und das Befestigungselement während des Lösens der Hauptverbindung von ungünstigen Einwirkungen von Seitenkräften absolut unversehrt bleiben. Das Montageelement und das Befestigungselement, die meist flexibel und/oder elastisch ausgebildet sind, können dann jederzeit wieder zusammengefügt werden, so dass sie wieder zusammenwirken können und die Hauptverbindung erneut, sicher und stabil herstellen können.

Erfindungsgemäß kann das Befestigungselement in Form eines Schnapphakens ausgebildet sein. Dabei können vorteilhafterweise elastische bzw. flexible Werkstoffe, beispielsweise Kunststoffe oder Federstahl, für die Bauteile, insbesondere für das Befestigungselement, ausgenutzt werden. Der Schnapphaken kann dabei mit einem komplementären Montageelement, beispielsweise in Form einer Rastnase, zusammenwirken, beispielsweise gegen diese oder hinter diese einschnappen bzw. einrasten, um eine stabile Hauptverbindung im zusammengebauten Zustand der Anordnung herzustellen. Beim Zusammenfügen der Bauteile kann sich der Schnapphaken elastisch verformen und/oder nachfedern, bis er anschließend hinter dem Montageelement, beispielswese hinter der komplementären Rastnase, form- und/oder kraftschlüssig verhakt. Es liegt also zumindest ein Formschluss vor. Wenn der Schnapphaken zudem vorgespannt zum Montageelement ausgebildet ist, kann zudem ein Kraftschluss vorliegen. Solche Verbindungspartner sind vorteilhafterweise einfach ausgebildet, sie sind kostengünstig in der Herstellung, einfach in der Montage und außerdem geeignet, um eine lösbare Hauptverbindung der Bauteile, beispielsweise zu Demontage-, Austausch- oder Wartungszwecken, zu realisieren.

Vorteilhafterweise kann das Befestigungselement mit dem Montageelement form- und/oder kraftschlüssig verbindbar sein. Dadurch erwächst der Vorteil, dass die Verbindungspartner auf eine bequeme und einfache Art die Hauptverbindung herstellen können, die ein schnelles Zusammenbauen der Bauteile ermöglicht. Eine form- und/oder kraftschlüssige Hauptverbindung kann auf eine vielfältige Weise hergestellt werden, indem das Montageelement und das Befestigungselement komplementär zueinander ausgebildet werden, d. h. dass die Form und die Kontur der Verbindungspartner einander entsprechend ausgewählt werden. Dies ermöglicht, dass das Montageelement und das Befestigungselement kostengünstig und einfach hergestellt werden können. Dadurch kann jeder beliebigen Situation, beispielsweise in einem Kraftfahrzeug, und jeder geforderten Geometrie der zu verbindenden Bauteile, beispielsweise eines Karosseriebauteils und eines entsprechenden Verkleidungsbauteils oder eines Verkleidungsbauteils und eines entsprechenden anderen Verkleidungsbauteils, flexibel entsprochen werden. Somit können die Anwendungsmöglichkeiten und Nutzbarkeit der erfindungsgemäßen Anordnung, insbesondere im Vergleich mit herkömmlichen Anordnungen, erheblich erhöht werden.

Erfindungsgemäß kann vorgesehen sein, dass das Montageelement ein Montagemittel, insbesondere in Form einer Rastnase, und das Befestigungselement ein dem Montagemittel komplementäres Befestigungsmittel, insbesondere in Form eines, beispielsweise abgewinkelten Hakens, aufweisen können, um die Hauptverbindung zwischen dem ersten Bauteil und dem zweiten Bauteil herzustellen. Dabei kann vorteilhafterweise das Montagemittel und das Befestigungsmittel aus einem elastischen Material, beispielsweise Kunststoff oder Federstahl, ausgebildet sein. Das Montagemittel in Form einer Rastnase kann dabei geometrisch komplementär zum Befestigungsmittel in Form eines Hakens ausgebildet, insbesondere ausgeformt, gespritzt oder gegossen sein. Der Haken kann an der Rastnase einschnappen und/oder einrasten, um die Hauptverbindung herzustellen und die Bauteile miteinander zu verbinden. Beim Zusammenfügen der Bauteile kann sich der Haken elastisch verformen und/oder nachfedern, bis er anschließend gegen die oder hinter der Rastnase, insbesondere form- und/oder kraftschlüssig, verhakt, um zumindest einen Formschluss herzustellen. Dann, im zusammengebauten Zustand der Anordnung, steht die Rastnase dem Haken im Weg, sodass das Abziehen des zweiten Bauteils vom ersten Bauteil ohne Einwirken von Kräften bzw. ohne externe Einwirkung nicht mehr möglich ist. Wenn der Haken außerdem federnd bzw. vorgespannt an der oder hinter der Rastnase am Befestigungselement zum Anliegen kommt, kann zudem ein Kraftschluss zwischen dem Haken und der Rastnase vorliegen. Der Haken und die Rastnase sind vorteilafterweise einfache geometrische Bauteile, die kostengünstig in der Herstellung sind.

Vorteilhafterweise kann das Montagemittel mit dem Befestigungsmittel form- und/oder kraftschlüssig verbindbar sein. Insbesondere kann es vorteilhaft sein, dass der Form- und/oder Kraftschluss zwischen dem Montagemittel und dem Befestigungsmittel für den Form- und/oder Kraftschluss zwischen dem Montageelement und dem Befestigungselement, insbesondere ausschließlich, sorgt, um die Hauptverbindung, insbesondere lösbar, herzustellen.

Weiterhin kann erfindungsgemäß vorgesehen sein, dass das Demontagemittel in Form einer Führung, insbesondere in Form einer Führungsnut, einer Führungsschiene oder einer Führungskulisse, und das Führungsmittel in Form eines, beispielsweise länglichen, Hakens ausgebildet sein können. Das Demontagemittel in Form einer Führung, wie beispielsweise einer Führungsnut, -schiene oder -kulisse, sowie das Führungsmittel in Form eines, beispielsweise länglichen, Hakens, sind ebenfalls einfach herzustellen. Die längliche Ausgestaltung der Führung und des Hakens helfen vorteilhafterweise dabei, die Hilfsverbindung derart herzustellen und so lange aufrechtzuerhalten, dass ein komplettes Lösen der Hauptverbindung, insbesondere ein vollständiges Abziehen des zweiten Bauteils vom ersten Bauteil, möglich ist. So muss vorteilhafterweise nur einmalig auf das Montagemittel bzw. auf das Befestigungsmittel eingewirkt werden, insbesondere mit einer Kraft senkrecht zur Verbindungsfläche der beiden Mittel, um das Montagemittel vom Befestigungsmittel zu entfernen und um das Demontagemittel mit dem Führungsmittel zu verbinden. Danach steht die Hilfsverbindung fest und hält das Montagemittel vom Befestigungsmittel so lange auf Abstand, bis die Hauptverbindung unterbrochen ist. Gleichzeitig sorgt das Demontagemittel mit dem Führungsmittel dafür, dass das zweite Bauteil vom ersten Bauteil ohne Anlegen jeglicher Kraft einfach und bequem, geführt durch die Führung, abgezogen werden kann.

Ferner kann erfindungsgemäß vorgesehen sein, dass das Demontagemittel mit dem Führungsmittel form- und/oder kraftschlüssig verbindbar sein kann. Insbesondere kann es vorteilhaft sein, dass der Form- und/oder Kraftschluss zwischen dem Demontagemittel und dem Führungsmittel für den Form- und/oder Kraftschluss zwischen dem Montageelement und dem Befestigungselement, insbesondere ausschließlich, sorgt, um die Hilfsverbindung, insbesondere lösbar, herzustellen. Folglich können auch das Demontagemittel und das Führungsmittel kostengünstig und einfach hergestellt werden. Auch das Demontagemittel und das Führungsmittel können der vorhandenen Situation, beispielsweise in einem Kraftfahrzeug, und der geforderten Geometrie der zu verbindenden Bauteile, beispielsweise des Karosseriebauteils und des dazu korrespondierenden Verkleidungsbauteils oder des Verkleidungsbauteils und des dazu korrespondierenden anderen Verkleidungsbauteils, flexibel angepasst werden.

Des Weiteren kann gemäß der Erfindung vorgesehen sein, dass die Erstreckungsrichtung des Montagemittels lotrecht zur Erstreckungsrichtung des Demontagemittels ausgerichtet sein kann. Dadurch kann der Vorteil erzielt werden, dass somit die Hauptverbindung und die Hilfsverbindung sicherer abgewechselt werden können. Insbesondere vorteilhaft ist, dass durch das Lösen der Hauptverbindung, was grundsätzlich lotrecht zur Erstreckungsrichtung des Montagemittels erfolgen kann, gleichzeitig die Hilfsverbindung entlang der vollen Erstreckungsrichtung des Demontagemittels hergestellt werden kann. Somit kann vorteilhafterweise in einem Schritt, insbesondere gleichzeitig, die Hauptverbindung gelöst und die Hilfsverbindung hergestellt werden.

Zudem kann gemäß der Erfindung vorgesehen sein, dass das Montageelement eine Plattform aufweisen kann, auf welcher das Demontagemittel, insbesondere länglich, ausgebildet sein kann, wobei die Erstreckungsrichtung des Montagemittels lotrecht zur Ebene der Plattform ausgerichtet sein kann. Folglich kann der Vorteil erreicht werden, dass die Hilfsverbindung besonders stabil ausgeführt werden kann, da die Plattform das Demontagemittel vorteilhafterweise entlang der gesamten Länge abstützen kann. Ebenfalls vorteilhaft ist, dass die Plattform das Montagemittel zumindest von einer Seite, lotrecht zur Erstreckungsrichtung des Montagemittels, abstützen kann, um das Abrutschen des Befestigungsmittels vom Montagemittel zu vermeiden und für mehr Stabilität in lotrechte Richtung zur Plattform zu sorgen.

Erfindungsgemäß kann vorteilhaft sein, dass die Erstreckungsrichtung des Befestigungsmittels lotrecht zur Erstreckungsrichtung des Führungsmittels ausgerichtet sein kann, und dass insbesondere das Führungsmittel an einer Seite des Befestigungselementes und das Befestigungsmittel an einer gegenüberliegenden Seite des Befestigungselementes ausgebildet sein können. Dadurch kann der Vorteil erreicht werden, dass die Hauptverbindung und die Hilfsverbindung stabil abgewechselt werden können. Weiterhin ist vorteilhaft, dass durch Lösen der Hauptverbindung, was ohnehin möglichst lotrecht zur Erstreckungsrichtung des Montagemittels erfolgen muss, gleichzeitig die Hilfsverbindung entlang der vollen Erstreckungsrichtung des Führungsmittels hergestellt werden kann. Somit kann vorteilhafterweise in einem Schritt, insbesondere gleichzeitig, die Hauptverbindung gelöst und die Hilfsverbindung hergestellt werden. Durch die Ausbildung des Führungsmittels an einer Seite des Befestigungselementes und des Befestigungsmittels an einer gegenüberliegenden Seite des Befestigungselementes kann der Vorteil erreicht werden, dass die Stabilität des Befestigungsmittels erhöht wird, da die Einwirkung von Kräften beim Herstellen der Hilfs- oder Hauptverbindung in unterschiedliche, beispielsweise entgegengesetzte, Richtungen verteilt werden kann. Somit kann auch die Stabilität der Hilfs- und Hauptverbindung verbessert werden.

Erfindungsgemäß kann ferner vorteilhaft sein, dass das Befestigungselement einen federnden Arm aufweisen kann, an dessen oberen Ende das Führungsmittel abgewinkelt, insbesondere um 90° abgewinkelt, zum Befestigungsmittel ausgebildet sein kann, wobei die Erstreckungsrichtung des Befestigungsmittels lotrecht zur Erstreckungsrichtung des Armes ausgerichtet sein kann, und wobei die Erstreckungsrichtung des Führungsmittels parallel zur Erstreckungsrichtung des Armes ausgerichtet sein kann. Somit kann für noch mehr Sicherheit und Robustheit des Befestigungselementes gesorgt werden sowie für die Einfachheit des Wechsels zwischen der Haupt- und Hilfsverbindung.

Vorteilhafterweise kann im zusammengebauten Zustand der Anordnung die Erstreckungsrichtung des Befestigungsmittels des Befestigungselementes lotrecht zur Ebene der Plattform des Montageelementes ausgerichtet sein, wobei die Erstreckungsrichtung des Führungsmittels des Befestigungselementes parallel zur Plattform des Montageelementes ausgerichtet sein kann. Vorteilhafterweise kann dadurch eine komplementäre Ausbildung des Befestigungselementes und des Montageelementes realisiert werden. Beim Lösen der Hauptverbindung kann dabei das Befestigungselement zur Seite gedrückt werden, wodurch das Befestigungsmittel vom Montagemittel entfernt werden kann und somit die Hauptverbindung mit nur einem Ruck gelöst werden kann. Gleichzeitig kann das Führungsmittel parallel zur und über der Plattform verfahren, bis es über und parallel zum Demontagemittel ausgerichtet ist, um die Hilfsverbindung in einem und demselben Schritt herzustellen. Dieser Schritt kann dabei vorteilhafterweise durch einmaliges und kurzes Anlegen einer Kraft geschehen, die im Wesentlichen senkrecht zur Verbindungsfläche zwischen dem Montagemittel und dem Befestigungsmittel angelegt werden kann. Alle weiteren Schritte, insbesondere ein zweiter Schritt, kann zur Demontage der Bauteile intuitiv, quasi von alleine eingeleitet werden, indem die Bauteile auseinander geführt werden.

Ferner kann vorteilhaft sein, dass das Montageelement mit dem Montagemittel und/oder dem Demontagemittel monolithisch und/oder materialeinheitlich ausgebildet sein kann, und dass insbesondere das Befestigungselement mit dem Befestigungsmittel und/oder dem Führungsmittel monolithisch und/oder materialeinheitlich ausgebildet sein kann. Dadurch kann der Herstellungsaufwand weiterhin reduziert werden. Hierzu können elastische Materialien verwendet werden, wie Kunststoff oder Federstahl, die außerdem die Nachgiebigkeit, Lösbarkeit und Flexibilität der Haupt- und Hilfsverbindung verbessern können.

Ebenfalls kann von Vorteil sein, dass das Montageelement und/oder das Befestigungselement aus einem flexiblen Material, insbesondere aus Kunststoff, ausgebildet sein können, und dass insbesondere das Montageelement und/oder der Schnapphaken mit Hilfe eines Spritzguss-Verfahrens hergestellt werden können. Dadurch kann die Herstellung des Montageelementes und/oder des Befestigungselementes noch weiter vereinfacht werden.

Weiterhin kann erfindungsgemäß vorgesehen sein, dass das erste Bauteil und/oder das zweite Bauteil einen Zugang, insbesondere in Form einer Öffnung, aufweisen können, um von außerhalb der Anordnung mit einem Werkzeug auf das Befestigungselement einzuwirken, um die Hauptverbindung zwischen dem ersten Bauteil und dem zweiten Bauteil zu lösen, und um eine Hilfsverbindung zwischen dem ersten Bauteil und dem zweiten Bauteil herzustellen. Dadurch kann erreicht werden, dass ein Durchlass zum Befestigungselement realisiert werden kann, um mittels eines Werkzeuges gegen die Vorspannung der Hauptverbindung einzuwirken und ein einfaches Lösen der Hauptverbindung zu realisieren. Damit kann außerdem, insbesondere gleichzeitig, auf eine einfache und bequeme Weise ein Wechsel zur Hilfsverbindung durchgeführt werden, um das Abziehen des zweiten Bauteils vom ersten Bauteil einfach und bequem durchzuführen.

Ferner wird die erfindungsgemäße Aufgabe durch ein Verfahren zum Demontieren eines zweiten Bauteils von einem ersten Bauteil, insbesondere eines Verkleidungsbauteils von einem Karosseriebauteil eines Kraftfahrzeuges oder eines Verkleidungsbauteils von einem anderen Verkleidungsbauteil, gelöst, wobei ein Montageelement am ersten Bauteil angeordnet ist, wobei ein Befestigungselement am zweiten Bauteil angeordnet ist, und wobei das Montageelement und das Befestigungselement derart ausgebildet sind, dass im zusammengebauten Zustand des ersten Bauteils und des zweiten Bauteils das Befestigungselement mit dem Montageelement in Wirkverbindung steht, um eine Hauptverbindung zwischen dem ersten Bauteil und dem zweiten Bauteil herzustellen. Dabei ist erfindungsgemäß vorgesehen, dass im ersten Schritt eine Hilfsverbindung zwischen dem ersten Bauteil und dem zweiten Bauteil hergestellt wird, um das Lösen der Hauptverbindung zwischen dem ersten Bauteil und dem zweiten Bauteil zu erleichtern, wobei die Hilfsverbindung mittels eines Demontagemittels am Montageelement und eines dem Demontagemittel komplementären Führungsmittels am Befestigungselement hergestellt wird.

Die Erfindungsidee liegt dabei darin, dass die Hilfsverbindung zwischen dem ersten Bauteil und dem zweiten Bauteil nur dann hergestellt wird, wenn das Lösen der Hauptverbindung beabsichtigt ist, beispielsweise zu Demontage-, Austausch- oder Wartungszwecken der Bauteile. In anderen Fällen, wenn sich das erste Bauteil und das zweite Bauteil im zusammengebauten Zustand befinden und ordnungsgemäß funktionieren, ist die Hilfsverbindung gemäß der Erfindung inaktiv. Die Hilfsverbindung wird gemäß der Erfindung ausschließlich dazu hergestellt, um das Lösen der Hauptverbindung zwischen dem ersten Bauteil und dem zweiten Bauteil zu erleichtern. Dabei schafft die Hilfsverbindung die Möglichkeit, die Verbindungspartner, die die Hauptverbindung realisieren, entgegen deren Vorspannung auseinanderzuziehen und zu halten. Dann kann das zweite Bauteil vom ersten Bauteil gelöst werden, wenn die Hilfsverbindung die Hauptverbindung entlastet und verhindert, dass während der Demontage des zweiten Bauteils vom ersten Bauteil die beiden Verbindungspartner sich aufeinander bewegen und die Hauptverbindung wieder herstellen können. Vorteilhaft wird die Hilfsverbindung erfindungsgemäß nur so lange aufrechterhalten, bis das zweite Bauteil vom ersten Bauteil so weit entfernt ist, dass ein Zuschnappen der Verbindungspartner die Hauptverbindung nicht wieder herstellen kann. An dieser Stelle kann man von einem äußersten Montagepunkt sprechen, der überschritten wurde. Die Hilfsverbindung wird erfindungsgemäß ab diesem Punkt ebenfalls, vorteilhafterweise automatisch, aufgehoben. Die beiden Bauteile, insbesondere das Montageelement und das Befestigungselement, bleiben beim Lösen der Hauptverbindung vorteilhafterweise von der Einwirkung von ungünstigen Seitenkräften komplett verschont. Das Anlegen solcher ungünstigen Kräfte, die bei den herkömmlichen Anordnungen auftreten können, weil die beiden Bauteile meistens zu lange und nur aus einem ungünstigen Winkel auseinander gedrückt werden können, um die Bauteile zu trennen, kann durch Schaffen der Hilfsverbindung vermieden werden.

Erfindungsgemäß kann vorteilhaft sein, dass im zweiten Schritt das zweite Bauteil vom ersten Bauteil abgezogen werden kann, wobei die Hilfsverbindung zum geführten Abziehen des zweiten Bauteils vom ersten Bauteil dienen kann. Dadurch kann der Vorteil erreicht werden, dass das Lösen der Hauptverbindung stabil ausgeführt werden kann. Ein geführtes Abziehen des zweiten Bauteils vom ersten Bauteil kann im Gegensatz zum gewaltvollen Kräfteeinwirken auf die Bauteile bei herkömmlichen Demontageverfahren bekannter Anordnungen einfach und schonend für die Bauteile erfolgen. Danach ist ein erneutes Herstellen der Hauptverbindung jederzeit wieder möglich, da das Montageelement und das Befestigungselement bei der Demontage völlig unversehrt bleiben. Das Montageelement und das Befestigungselement, die meist aus flexiblen Materialien, oft elastisch bzw. federnd ausgebildet sind, können dann jederzeit wieder zusammengefügt werden, so dass sie zuschnappen können und die Hauptverbindung erneut, sicher und stabil herstellen können.

Erfindungsgemäß kann vorgesehen sein, dass die Hauptverbindung mittels eines Montagemittels am Montageelement, insbesondere in Form einer Rastnase, und eines dem Montagemittel komplementären Befestigungsmittels am Befestigungselement, insbesondere in Form eines Schnapphakens, beispielsweise eines abgewinkelten Hakens, hergestellt werden kann, wobei insbesondere das Montagemittel mit dem Befestigungsmittel form- und/oder kraftschlüssig verbunden werden können. Dabei kann vorteilhafterweise die Elastizität der Werkstoffe, beispielsweise Kunststoffe oder Federstahl, für die Verbindung des ersten und des zweiten Bauteils ausgenutzt werden. Der Schnapphaken kann dabei mit der Rastnase zusammenwirken, insbesondere einschnappen bzw. einrasten, um eine stabile Hauptverbindung im zusammengebauten Zustand des ersten und des zweiten Bauteils herzustellen. Beim Zusammenfügen der Bauteile kann sich der Schnapphaken elastisch verformen, bis er anschließend hinter der komplementären Rastnase form- und/oder kraftschlüssig verhakt. Es kann also zumindest ein Formschluss hergestellt werden, um die Hauptverbindung zu realisieren. Wenn der Schnapphaken zudem vorgespannt zum Montageelement ausgebildet ist, kann zudem ein Kraftschluss hergestellt werden, um die Hauptverbindung zu stabilisieren. Solche Verbindungspartner können vorteilhafterweise einfach und kostengünstig hergestellt und ohne nennenswerten Aufwand montiert werden. Sie sorgen außerdem vorteilhafterweise dafür, eine lösbare Hauptverbindung, beispielsweise zur Demontage-, Austausch- oder Wartungszwecken, einfach und sicher herzustellen. Erfindungsgemäß kann des Weiteren vorgesehen sein, dass die Hilfsverbindung mittels des Demontagemittels am Montageelement in Form einer Führung, einer Führungsnut, einer Führungsschiene oder einer Führungskulisse und mittels des dem Demontagemittel komplementären Führungsmittels am Befestigungselement in Form eines, beispielsweise länglichen, Hakens hergestellt werden kann, wobei insbesondere das Demontagemittel mit dem Führungsmittel form- und/oder kraftschlüssig verbunden werden kann. Das Demontagemittel in Form einer Führung, wie beispielsweise einer Führungsnut, -schiene oder -kulisse, sowie das Führungsmittel in Form eines, beispielsweise länglichen, Hakens, können erfindungsgemäß ebenfalls einfach hergestellt werden. Die gestreckte Ausgestaltung der Führung und die längliche Ausgestaltung des Hakens können vorteilhafterweise helfen, die Hilfsverbindung über eine längere Strecke aufrechtzuerhalten, so dass ein komplettes Lösen der Hauptverbindung, insbesondere ein vollständiges Abziehen des zweiten Bauteils vom ersten Bauteil, ermöglicht werden kann. So muss vorteilhafterweise nur einmalig auf das Montagemittel bzw. auf das Befestigungsmittel eingewirkt werden, beispielsweise mit einer Kraft in etwa senkrecht zur Verbindungsfläche der beiden Mittel, um das Montagemittel vom Befestigungsmittel zu entfernen und um gleichzeitig in einem Schritt das Demontagemittel mit dem Führungsmittel zu verbinden. Danach kann die Hilfsverbindung durch das Demontagemittel und das Führungsmittel festgehalten werden und das Montagemittel vom Befestigungsmittel auf Abstand gehalten werden, so dass die Hauptverbindung unterbrochen wird. Gleichzeitig kann das Demontagemittel mit dem Führungsmittel dafür sorgen, dass ohne Anlegen wesentlicher Kraft, insbesondere senkrecht zur Verbindungsfläche der Mittel, das zweite Bauteil vom ersten Bauteil leicht abgezogen werden kann.

Weitere, die Erfindung verbessernde Maßnahmen werden nachstehend mit der Beschreibung der bevorzugten Ausführungsbeispiele der Erfindung anhand der Figuren näher dargestellt. Dabei ist zu beachten, dass die Figuren nur beschreibenden Charakter haben und nicht dazu gedacht sind, die Erfindung in irgendeiner Form einzuschränken.

Es zeigen:
- Fig. 1: eine schematische Darstellung einer erfindungsgemäßen Anordnung,
- Fig. 2: eine perspektivische Darstellung eines ersten Bauteils,
- Fig. 3: eine perspektivische Darstellung eines zweiten Bauteils,
- Fig. 4: eine perspektivische Darstellung des ersten Bauteils und des zweiten Bauteils im zusammengebauten Zustand der erfindungsgemäßen Anordnung,
- Fig. 5: eine Draufsicht auf die Anordnung gemäß der Figur 4,
- Fig. 5a: eine schematische Darstellung der Anordnung gemäß der Figur 5 im zusammengebauten Zustand der erfindungsgemäßen Anordnung zur Veranschaulichung der Durchführung eines erfindungsgemäßen Verfahrens,
- Fig. 5b: eine schematische Darstellung der Anordnung gemäß der Figur 5 nach dem Durchführen des ersten Schrittes des erfindungsgemäßen Verfahrens, und
- Fig. 5c: eine schematische Darstellung der Anordnung gemäß der Figur 5 nach dem Durchführen des zweiten Schrittes des erfindungsgemäßen Verfahrens.

In den unterschiedlichen Figuren sind gleiche Teile stets mit denselben Bezugszeichen versehen, weshalb diese in der Regel nur einmal beschrieben werden.

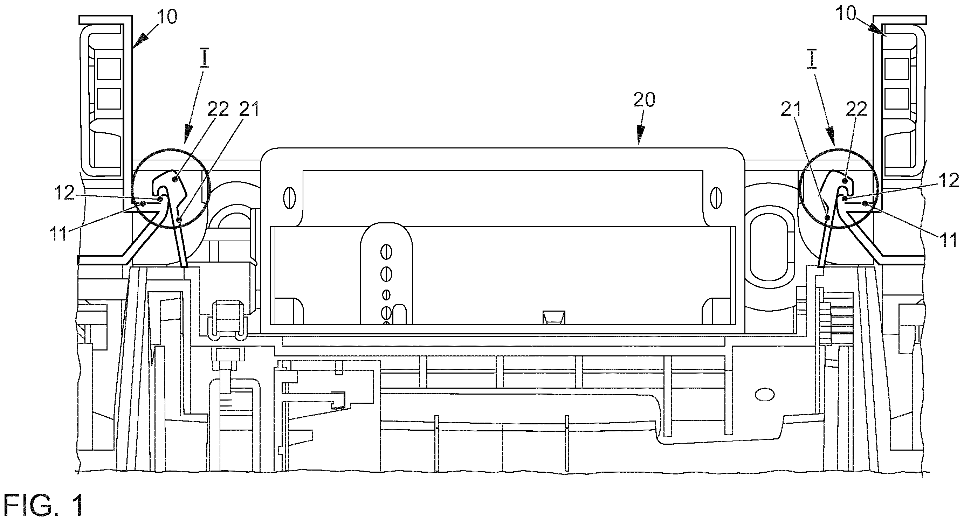

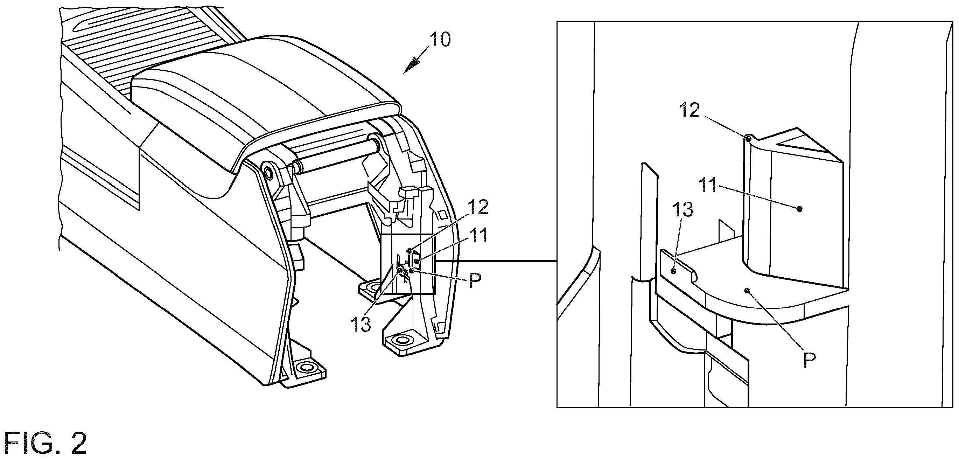

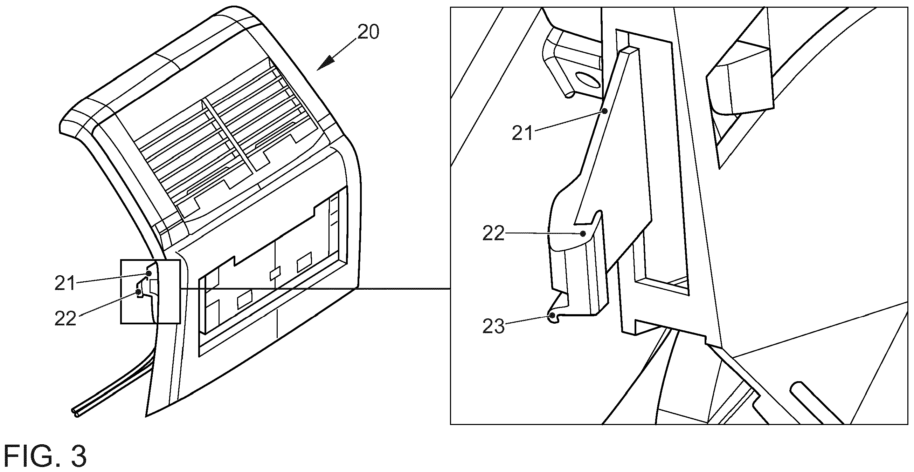

In den Figuren 1, 2 und 3 ist eine erfindungsgemäße Anordnung dargestellt, die zum lösbaren Verbinden eines ersten Bauteils 10 (vergrößert gezeigt in der Figur 2) mit einem zweiten Bauteil 20 (vergrößert gezeigt in der Figur 3) ausgelegt ist. Das erste Bauteil 10 ist dabei ein Karosseriebauteil 10 eines Kraftfahrzeuges und das zweite Bauteil 20 ist ein entsprechendes Verkleidungsbauteil 20, hier eine Mittelarmlehne, des Kraftfahrzeuges. Am ersten Bauteil 10 ist dabei jeweils rechts und links ein Montageelement 11 angeordnet und am zweiten Bauteil 20 ist jeweils rechts und links ein Befestigungselement 21 angeordnet, die dazu dienen, die Bauteile 10, 20 miteinander zu verbinden. Jedes Paar, das Montageelement 11 und das Befestigungselement 21, die jeweils links und rechts an den Bauteilen 10, 20 vorgesehen sind, sichern die Bauteile 10, 20 gegen Verschieben nach rechts und nach links sowie gegen Lösen der Bauteile 10, 20 voneinander, insbesondere das Verkleidungsbauteil 20 gegen Abfallen oder Abnehmen vom Karosseriebauteil 10. Das Montageelement 11 und das Befestigungselement 21 (gemeint jeweils ein Element 11, 21 in jedem paar) sind derart ausgebildet, dass im zusammengebauten Zustand der Anordnung, der in der Figur 1 zu sehen ist, das Befestigungselement 21 mit dem Montageelement 11 form- und/oder kraftschlüssig in Wirkverbindung stehen, um eine Hauptverbindung I zwischen dem ersten Bauteil 10 und dem zweiten Bauteil 20 herzustellen.

Das Befestigungselement 21 ist gemäß den Figuren 1 bis 5c in Form eines Schnapphakens 21 ausgebildet. Der Schnapphaken 21 kann dabei erfindungsgemäß aus einem elastischen bzw. flexiblen Material, beispielsweise Kunststoff oder Federstahl, ausgebildet sein. Der Schnapphaken 21 kann dabei mit einem komplementären Montageelement 11 in Form einer Nase 11, zusammenwirken, beispielsweise gegen diese oder hinter diese einschnappen bzw. einrasten, um eine stabile form- und/oder kraftschlüssige Hauptverbindung I der Bauteile 10, 20 herzustellen. Beim Zusammenfügen der Bauteile 10, 20 kann sich der Schnapphaken 21 elastisch verformen und/oder nachfedern bis er anschließend vorgespannt gegen die Nase 11 zur Auflage kommt. Der Vorteil solcher Verbindungspartner, wie der Schnapphaken 21 und die Nase 11, liegt darin, dass sie einfach ausgebildet, kostengünstig in Herstellung und einfach in Montage sind. Außerdem eignen sich solche Verbindungspartner optimal, um eine einfache, lösbare Hauptverbindung I der Bauteile 10, 20 auf eine einfache Weise zu realisieren.

In der Figur 1 ist ersichtlich, dass das Befestigungselement 21 und das Montageelement 11 der Form nach komplementär zueinander ausgebildet sind, um zumindest eine formschlüssige, bevorzugt form- und kraftschlüssige, Hauptverbindung I zu realisieren. Außerdem sind gemäß der Erfindung andere geometrische Ausführungen des Befestigungselementes 21 und des Montageelementes 11 denkbar, die geeignet sind, die Bauteile 10, 20 form- und kraftschlüssig miteinander zu verbinden. Somit kann die Erfindung in unterschiedlichen Fahrzeugmodellen mit verschiedenen Verkleidungsbauteilen umgesetzt werden, wodurch die Anwendungsmöglichkeiten und Nutzbarkeit der erfindungsgemäßen Anordnung vorteilhafterweise erhöht werden.

Wie ferner in den Figuren 1 und 2 zu sehen ist, ist das Montageelement 11 mit einem Montagemittel 12 in Form einer Rastnase 12 ausgebildet. Wie in den Figuren 1 und 3 zu sehen ist, ist das Befestigungselement 21 komplementär dazu mit einem Befestigungsmittel 22 in Form eines abgewinkelten Hakens 22 ausgestaltet, um die Hauptverbindung I zwischen dem ersten Bauteil 10 und dem zweiten Bauteil 20 herzustellen. Auch das Montagemittel 12 sowie das Befestigungsmittel 22 können aus einem elastischen Material, beispielsweise Kunststoff oder Federstahl, ausgebildet sein. Das Montagemittel 12 in Form der Rastnase 12 ist dabei geometrisch komplementär zum Befestigungsmittel 22 in Form des abgewinkelten Hakens 22 ausgebildet. Im zusammengebauten Zustand der Bauteile 10, 20 stehen das Montagemittel 12 und das Befestigungsmittel 22 einander im Weg, so dass das Lösen des ersten Bauteils 10 vom zweiten Bauteil 20 ohne Einwirkung von externen Kräften nicht möglich ist. Außerdem können das Montagemittel 12 und das Befestigungsmittel 22 derart zueinander vorgespannt sein, dass zudem ein Reibungswiderstand an der Berührungsfläche zwischen den Bauteilen 10, 20 entsteht, wodurch das Lösen der Bauteile 10, 20 erschwert werden kann. Das Montagemittel 12 und das Befestigungsmittel 22 können jeweils in einem Spritzgussverfahren am Montageelement 11 bzw. am Befestigungselement 21 angeformt sein oder stoffschlüssig, beispielsweise mit Hilfe von Kleber oder mittels Anschweißen am Montageelement 11 bzw. am Befestigungselement 21 befestigt werden. Der Haken 22 und die Rastnase 12 sind vorteilafterweise einfache geometrische Bauteile, die einfach und kostengünstig in Herstellung sind.

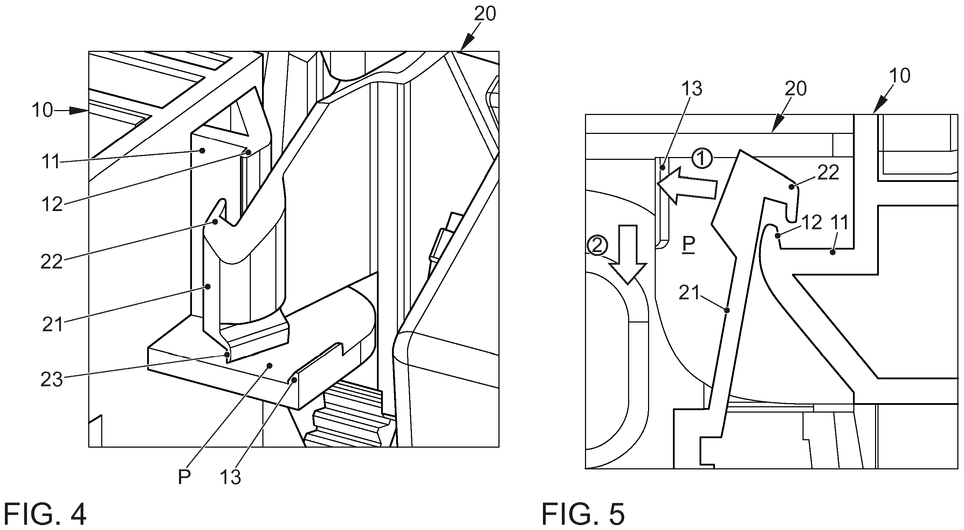

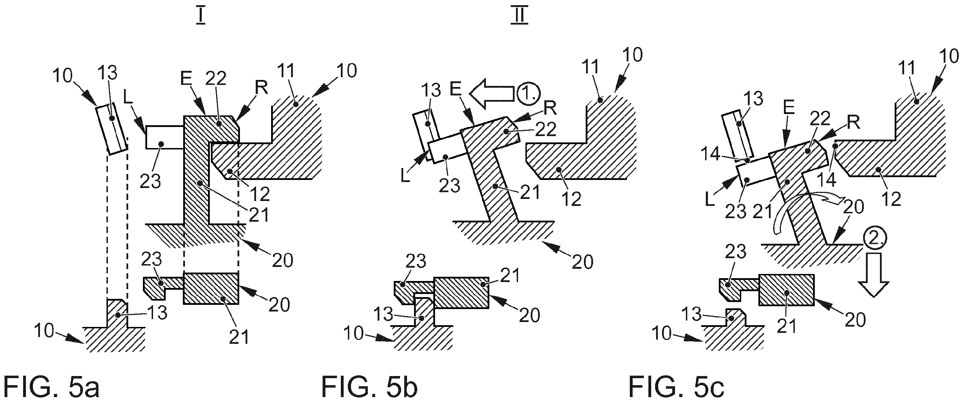

Das Montageelement 11 ist außerdem mit einem Demontagemittel 13 ausgebildet, wie in der Figur 2 zu erkennen ist. Komplementär dazu ist das Befestigungselement 21 mit einem Demontagemittel 13 ausgestaltet, wie in der Figur 3 zu sehen ist. Dabei sind das Demontagemittel 13 und das Führungsmittel 23 derart ausgeformt, dass im zusammengebauten Zustand der Anordnung das Demontagemittel 13 vom Führungsmittel 23 beabstandet ist, wie es in der Figur 4 und der Figur 5a dargestellt ist.

Die Figur 4 verdeutlicht den Erfindungsgedanken, der darin liegt, dass das Demontagemittel 13 mit dem Führungsmittel 23 grundsätzlich nicht verbunden und nur dann in Wirkverbindung bringbar ist, um eine Hilfsverbindung II (siehe die Figur 5b) zwischen dem ersten Bauteil 10 und dem zweiten Bauteil 20 herzustellen, und um das Lösen der Hauptverbindung I zwischen dem ersten Bauteil 10 und dem zweiten Bauteil 20 zu erleichtern, was im Folgenden im Detail anhand der Figuren 5a bis 5c beschrieben wird.

Erfindungsgemäß wird die Hilfsverbindung II zwischen dem ersten Bauteil 10 und dem zweiten Bauteil 20, die in der Figur 5b zu sehen ist, nur dann, hergestellt, wenn das Lösen der Hauptverbindung I erwünscht ist. Das kann z. B. der Fall sein, wenn das zweite Bauteil 20 vom ersten Bauteil 10 zwecks Austausch, Wartung oder Reparatur abgenommen werden muss. In allen anderen Fällen, insbesondere bei einem betriebsgemäßen Gebrauch der Bauteile 10, 20 ist die Hilfsverbindung I inaktiv, wie in den Figuren 4 und 5a dargestellt ist. Die Hilfsverbindung II (siehe die Figur 5b) dient gemäß der Erfindung ausschließlich dazu, um das Lösen der Hauptverbindung I zwischen dem ersten Bauteil 10 und dem zweiten Bauteil 20 zu erleichtern. Hierzu schafft die Hilfsverbindung II die Möglichkeit, das Montagemittel 12 und das Befestigungsmittel 22 auf Abstand zueinander zu bringen, die die Hauptverbindung I gemäß den Figuren 4, 5 und 5a realisieren, und auf Abstand zueinander zu halten, solange das zweite Bauteil 20 vom ersten Bauteil 10 entfernt wird. Vorteilhafterweise kann die Hilfsverbindung II außerdem helfen, dass das zweite Bauteil 20 vom ersten Bauteil 10 gesichert durch das Führungsmittel 23, welches durch das Demontagemittel 13 geleitet wird, abgezogen werden kann (siehe die Figur 5b). Im Schritt 1 gemäß der Figur 5b ist keine Einwirkung von Kräften auf die oder zwischen die Bauteile 10, 20 notwendig, um das Befestigungsmittel 22 auf Abstand vom Montagemittel 12 zu halten.

Anhand der Figur 5b ist es ersichtlich, dass die Hilfsverbindung II vorteilhafterweise dazu dient, die Hauptverbindung I zwischen dem Montagemittel 12 und dem Befestigungsmittel 22 zu entlasten und zu verhindern, dass während des Abziehens des zweiten Bauteils 20 vom ersten Bauteil 10 die beiden Verbindungspartner 12, 22 aufeinander zuschnappen können. Die Verbindungspartner im Sinne der vorliegenden Erfindung sind das Montageelement 11, insbesondere das Montagemittel 12, und das Befestigungselement 21, insbesondere das Befestigungsmittel 22. Die Hilfsverbindung II hilft dabei so lange, die Verbindungspartner 12, 22 auf Abstand zu halten, bis das zweite Bauteil 20 vom ersten Bauteil 10 so weit entfernt ist, dass ein Zuschnappen der Verbindungspartner 12, 22 die zwei Bauteile 10, 20 nicht mehr im Rahmen der Hauptverbindung I verbinden kann. Diese Situation ist in der Figur 5c dargestellt. Dabei ist der äußerste Demontagepunkt 14 überschritten, nach welchem das Herstellen der Hauptverbindung I durch das Montagemittel 12 und das Befestigungsmittel 22 nicht mehr möglich ist. Erfindungsgemäß wird die Hilfsverbindung II ab diesem Demontagepunkt 14 ebenfalls automatisch aufgehoben, wie es in der Figur 5c verdeutlicht ist. Die beiden Bauteile 10, 20 und die Verbindungspartner, insbesondere das Montagemittel 12 und das Befestigungsmittel 22, bleiben beim Lösen der Hauptverbindung I gemäß den erfindungsgemäßen Schritten 1 und 2, die in den Figuren 5b und 5c gezeigt sind, vorteilhafterweise durch die Hilfsverbindung II von der Einwirkung von ungünstigen Seitenkräften komplett verschont, die bei den herkömmlichen Anordnungen die Verbindungspartner beschädigen können.

Die Figuren 5a bis 5c zeigen somit, wie die Erfindung dafür sorgt, dass das Lösen der Hauptverbindung I einfach und schonend für die Bauteile 10, 20 erfolgen kann. Danach ist ein erneutes Herstellen der Hauptverbindung I gemäß den Figuren 1, 4, 5 oder 5a jederzeit wieder möglich.

Wie weiterhin in den Figuren 4, 5a bis 5c zu sehen ist, ist das Demontagemittel 13 in Form einer Führungskulisse 13 und das Führungsmittel 23 in Form eines dazu komplementären länglichen Hakens 23 ausgebildet. Die längliche Ausbildung der Führungskulisse 13 und des Hakens 23 helfen vorteilhafterweise dabei, die Hilfsverbindung II so lange aufrechtzuerhalten, dass ein komplettes Lösen der Hauptverbindung I, mindestens bis zu dem Demontagepunkt 14 der Figur 5c, durch vollständiges Abziehen des zweiten Bauteils 20 vom ersten Bauteil 10 möglich ist. So muss vorteilhafterweise nur einmalig auf das Montagemittel 12 bzw. auf das Befestigungsmittel 22 eingewirkt werden, insbesondere mit einer Kraft senkrecht zu Verbindungsfläche der beiden Mittel 12, 22, um das Montagemittel 12 vom Befestigungsmittel 22 zu entfernen und um das Demontagemittel 13 mit dem Führungsmittel 23 zu verbinden. Danach steht die Hilfsverbindung II gemäß der Figur 5b so lange fest und hält das Montagemittel 12 vom Befestigungsmittel 22 so lange auf Abstand, bis die Hauptverbindung I unterbrochen ist, d. h. bis zu dem Zeitpunkt der Figur 5c, ab welchem der Demontagepunkt 14 überschritten ist.

Wie zudem in den Figuren 4, 5a bis 5c zu erkennen ist, ist die Erstreckungsrichtung des Montagemittels 12 lotrecht zur Erstreckungsrichtung des Demontagemittels 13 ausgerichtet. Dadurch kann der Vorteil erzielt werden, dass die Hauptverbindung I und die Hilfsverbindung II sicherer und stabil abgewechselt werden können. Insbesondere vorteilhaft ist dabei, dass durch das Lösen der Hauptverbindung I im Schritt 1 der Figur 5b, was im Wesentlichen lotrecht zur Erstreckungsrichtung des Montagemittels 12 erfolgt, gleichzeitig die Hilfsverbindung II entlang der vollen Erstreckungsrichtung des Demontagemittels 13 hergestellt wird. Somit kann vorteilhafterweise in einem Schritt 1 der Figur 5b gleichzeitig die Hauptverbindung I gelöst und die Hilfsverbindung II hergestellt werden.

Das Montageelement 11 weist dabei eine Plattform P auf, auf welcher das Demontagemittel 13 sich länglich erstreckt, wobei die Erstreckungsrichtung des Montagemittels 12 lotrecht zur Ebene der Plattform P ausgerichtet ist. Dadurch kann die Hilfsverbindung II besonders stabil ausgeführt werden, da die Plattform P das Demontagemittel 13 vorteilhafterweise entlang der gesamten Länge abstützt. Ebenfalls vorteilhaft ist, dass die Plattform P das Montagemittel 12 zumindest von unten abstützt, um das Abrutschen des Befestigungsmittels 22 vom Montagemittel 12 nach unten zu vermeiden.

Auch die Erstreckungsrichtung des Befestigungsmittels 22 ist lotrecht zur Erstreckungsrichtung des Führungsmittels 23 ausgerichtet, wobei das Führungsmittel 23 an einer linken Seite L des Befestigungselementes 21 und das Befestigungsmittel 22 an einer rechten Seite R des Befestigungselementes 21 ausgebildet sind. Dadurch können die Hauptverbindung I und die Hilfsverbindung II stabil abgewechselt werden, da durch Lösen der Hauptverbindung I, was ohnehin möglichst lotrecht zur Erstreckungsrichtung des Montagemittels 12 erfolgen muss, gleichzeitig die Hilfsverbindung II entlang der vollen Erstreckungsrichtung des Führungsmittels 23 hergestellt wird. Somit kann in nur einem Schritt 1 gemäß der Figur 5b die Hauptverbindung I gelöst und die Hilfsverbindung II hergestellt werden. Durch die Ausbildung des Führungsmittels 23 an der linke Seite L des Befestigungselementes 21 und des Befestigungsmittels 22 an der rechten Seite R des Befestigungselementes 21 kann der Vorteil erreicht werden, dass das Befestigungsmittel 21 stabil wirken kann, da es der Einwirkung von Kräften beim Herstellen der Hilfsverbindung II oder der Hauptverbindung I in entgegengesetzte Richtungen standhalten muss. Als Folge kann dadurch auch die Stabilität der Hilfsverbindung II und der Hauptverbindung I erhöht werden.

Erfindungsgemäß ist das Befestigungselement 21 in Form eines federnden Armes ausgebildet, an welchem oberen Ende E das Führungsmittel 23 um 90° abgewinkelt zum Befestigungsmittel 22 ausgebildet ist, wobei die Erstreckungsrichtung des Befestigungsmittels 22 lotrecht zur Erstreckungsrichtung des Armes ausgerichtet ist, und wobei die Erstreckungsrichtung des Führungsmittels 23 parallel zur Erstreckungsrichtung des Armes ausgerichtet ist.

Im zusammengebauten Zustand der Anordnung I, welcher in den Figuren 1, 4 und 5a gezeigt ist, ist die Erstreckungsrichtung des Befestigungsmittels 22 des Befestigungselementes 21 lotrecht zur Ebene der Plattform P des Montageelementes 11 ausgerichtet, wobei die Erstreckungsrichtung des Führungsmittels 23 des Befestigungselementes 21 parallel zur Plattform P des Montageelementes 11 ausgerichtet ist. Somit ist eine komplementäre geometrische Ausgestaltung des Montageelementes 11 und des Befestigungselementes 21 sichergestellt.

Gemäß der Erfindung ist es denkbar, dass das Montageelement 11 mit dem Montagemittel 12 und/oder dem Demontagemittel 13 monolithisch und/oder materialeinheitlich ausgebildet sein kann, und dass insbesondere das Befestigungselement 21 mit dem Befestigungsmittel 22 und/oder dem Führungsmittel 23 monolithisch und/oder materialeinheitlich ausgebildet sein kann. Ebenfalls ist es gemäß der Erfindung denkbar, dass das Montageelement 11 und/oder das Befestigungselement 21 aus einem flexiblen Material, insbesondere aus Kunststoff, ausgebildet sein kann, und dass insbesondere das Montageelement 11 und/oder der Schnapphaken 21 mit Hilfe eines Spritzguss-Verfahrens hergestellt werden kann.

Die voranstehende Beschreibung der Figuren 1 bis 5c beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen. Insbesondere kann weiterhin erfindungsgemäß vorgesehen sein, dass das erste Bauteil 10 und/oder das zweite Bauteil 20 einen Zugang, insbesondere in Form einer Öffnung, aufweisen kann, um von außerhalb der Anordnung mit einem Werkzeug auf das Befestigungselement 21 einzuwirken, um die Hauptverbindung I zwischen dem ersten Bauteil 10 und dem zweiten Bauteil 20 zu lösen, und um eine Hilfsverbindung II zwischen dem ersten Bauteil 10 und dem zweiten Bauteil 20 herzustellen. Dadurch kann erreicht werden, dass ein Durchlass von außen zum Befestigungselement 21 realisiert werden kann, um mittels eines Werkzeuges gegen die Vorspannung des Befestigungselementes 21 einzuwirken und ein einfaches Lösen der Hauptverbindung I zu ermöglichen. Damit kann außerdem, insbesondere gleichzeitig, auf eine einfache und bequeme Weise ein Wechsel zwischen der Hauptverbindung I und der Hilfsverbindung II durchgeführt werden, um das Abziehen des zweiten Bauteils 20 vom ersten Bauteil 10 einfach und bequem durchzuführen.

### Bezugszeichenliste

- 1: erster Verfahrensschritt
- 2: zweiter Verfahrensschritt

- 10: erstes Bauteil/Karosseriebauteil
- 11: Montageelement
- 12: Montagemittel
- 13: Demontagemittel
- 14: Demontagepunkt

- 20: zweites Bauteil/Verkleidungsbauteil
- 21: Befestigungselement/Schnapphaken
- 22: Befestigungsmittel
- 23: Führungsmittel

- I: Hauptverbindung
- II: Hilfsverbindung

- E: oberes Ende des Schnapphakens
- L: linke bzw. innere Seite des Schnapphakens, an der das Führungsmittel abgewinkelt ist
- R: rechte bzw. äußere Seite des Schnapphaken, an der das Schnappmittel abgewinkelt ist

- P: Plattform am Montageelement, an der das Demontagemittel sich erstreckt

## Patentansprüche

1. Anordnung zum lösbaren Verbinden eines ersten Bauteils (10) mit einem zweiten Bauteil (20), insbesondere eines Karosseriebauteils mit einem Verkleidungsbauteil oder eines Verkleidungsbauteils mit einem anderen Verkleidungsbauteil eines Kraftfahrzeuges, mit
einem Montageelement (11), welches am ersten Bauteil (10) angeordnet ist,
und einem Befestigungselement (21), welches am zweiten Bauteil (20) angeordnet ist,
wobei das Montageelement (11) und das Befestigungselement (21) derart ausgebildet sind,
dass im zusammengebauten Zustand der Anordnung das Befestigungselement (21) mit dem Montageelement (11) in Wirkverbindung steht,
um eine Hauptverbindung (I) zwischen dem ersten Bauteil (10) und dem zweiten Bauteil (20) herzustellen,
**dadurch gekennzeichnet,**
**dass** das Montageelement (11) ein Demontagemittel (13) und das Befestigungselement (21) ein dem Demontagemittel (13) komplementäres Führungsmittel (23) aufweist,
wobei das Demontagemittel (13) und das Führungsmittel (23) derart ausgebildet sind,
**dass** im zusammengebauten Zustand der Anordnung das Demontagemittel (13) vom Führungsmittel (23) beabstandet ist,
und **dass** das Demontagemittel (13) mit dem Führungsmittel (23), insbesondere nur dann, in Wirkverbindung bringbar ist,
um eine Hilfsverbindung (II) zwischen dem ersten Bauteil (10) und dem zweiten Bauteil (20) herzustellen,
und um das Lösen der Hauptverbindung (I) zwischen dem ersten Bauteil (10) und dem zweiten Bauteil (20) zu erleichtern.

2. Anordnung nach Anspruch 1, **dadurch gekennzeichnet, dass** das Befestigungselement in Form eines Schnapphakens ausgebildet ist.

3. Anordnung nach Anspruch 1 oder 2, **dadurch gekennzeichnet, dass** das Befestigungselement (21) mit dem Montageelement (11) form- und/oder kraftschlüssig verbindbar ist.

4. Anordnung nach einem der vorhergehenden Ansprüche, **dadurch gekennzeichnet, dass** das Montageelement (11) ein Montagemittel (12), insbesondere in Form einer Rastnase, und das Befestigungselement (21) ein dem Montagemittel (12) komplementäres Befestigungsmittel (22), insbesondere in Form eines, beispielsweise abgewinkelten, Hakens, aufweist, um die Hauptverbindung (I) zwischen dem ersten Bauteil (10) und dem zweiten Bauteil (20) herzustellen.

5. Anordnung nach Anspruch 4, **dadurch gekennzeichnet, dass** das Montagemittel (12) mit dem Befestigungsmittel (22) form- und/oder kraftschlüssig verbindbar ist.

6. Anordnung nach einem der vorhergehenden Ansprüche, **dadurch gekennzeichnet, dass** das Demontagemittel (13) in Form einer Führung, insbesondere in Form einer Führungsnut, einer Führungsschiene oder einer Führungskulisse, und das Führungsmittel (23) in Form eines, beispielsweise länglichen, Hakens ausgebildet sind.

7. Anordnung nach einem der vorhergehenden Ansprüche, **dadurch gekennzeichnet, dass** das Demontagemittel (13) mit dem Führungsmittel (23) form- und/oder kraftschlüssig verbindbar ist.

8. Anordnung nach einem der Ansprüche 4 bis 7, **dadurch gekennzeichnet, dass** die Erstreckungsrichtung des Montagemittels (12) lotrecht zur Erstreckungsrichtung des Demontagemittels (13) ausgerichtet ist.

9. Anordnung nach einem der Ansprüche 4 bis 8, **dadurch gekennzeichnet, dass** das Montageelement (11) eine Plattform (P) aufweist, auf welcher das Demontagemittel (13), insbesondere länglich, ausgebildet ist, wobei die Erstreckungsrichtung des Montagemittels (12) lotrecht zur Ebene der Plattform (P) ausgerichtet ist.

10. Anordnung nach einem der Ansprüche 4 bis 9, **dadurch gekennzeichnet, dass** die Erstreckungsrichtung des Befestigungsmittels (22) lotrecht zur Erstreckungsrichtung des Führungsmittels (23) ausgerichtet ist, und dass insbesondere das Führungsmittel (23) an einer Seite (L) des Befestigungselementes (21) und dass das Befestigungsmittel (22) an einer gegenüberliegenden Seite (R) des Befestigungselementes (21) ausgebildet sind.

11. Anordnung nach einem der Ansprüche 4 bis 10, **dadurch gekennzeichnet, dass** das Befestigungselement (21) einen federnden Arm aufweist, an dessen oberen Ende (E) das Führungsmittel (23) abgewinkelt, insbesondere um 90° abgewinkelt, zum Befestigungsmittel (22) ausgebildet ist, wobei die Erstreckungsrichtung des Befestigungsmittels (22) lotrecht zur Erstreckungsrichtung des Armes ausgerichtet ist, und wobei die Erstreckungsrichtung des Führungsmittels (23) parallel zur Erstreckungsrichtung des Armes ausgerichtet ist.

12. Anordnung nach einem der Ansprüche 4 bis 11, **dadurch gekennzeichnet, dass** im zusammengebauten Zustand der Anordnung die Erstreckungsrichtung des Befestigungsmittels (22) des Befestigungselementes (21) lotrecht zur Ebene der Plattform (P) des Montageelementes (11) ausgerichtet ist, wobei die Erstreckungsrichtung des Führungsmittels (23) des Befestigungselementes (21) parallel zur Plattform (P) des Montageelementes (11) ausgerichtet ist.

13. Anordnung nach einem der Ansprüche 4 bis 12, **dadurch gekennzeichnet, dass** das Montageelement (11) mit dem Montagemittel (12) und/oder dem Demontagemittel (13) monolithisch und/oder materialeinheitlich ausgebildet ist, und dass insbesondere das Befestigungselement (21) mit dem Befestigungsmittel (22) und/oder dem Führungsmittel (23) monolithisch und/oder materialeinheitlich ausgebildet ist.

14. Anordnung nach einem der vorhergehenden Ansprüche, **dadurch gekennzeichnet, dass** das Montageelement (11) und/oder das Befestigungselement (21) aus einem flexiblen Material, insbesondere aus Kunststoff, ausgebildet ist, und dass insbesondere das Montageelement (11) und/oder der Schnapphaken (21) mit Hilfe eines Spritzguss-Verfahrens herstellbar ist.

15. Anordnung nach einem der vorhergehenden Ansprüche, **dadurch gekennzeichnet, dass** das erste Bauteil (10) und/oder das zweite Bauteil (20) einen Zugang, insbesondere in Form einer Öffnung, aufweist, um von außerhalb der Anordnung mit einem Werkzeug auf das Befestigungselement (21) einzuwirken, um die Hauptverbindung (I) zwischen dem ersten Bauteil (10) und dem zweiten Bauteil (20) zu lösen, und um eine Hilfsverbindung (II) zwischen dem ersten Bauteil (10) und dem zweiten Bauteil (20) herzustellen.

16. Verfahren zum Demontieren eines zweiten Bauteils (20) von einem ersten Bauteil (10), insbesondere eines Verkleidungsbauteils von einem Karosseriebauteil oder eines Verkleidungsbauteils von einem anderen Verkleidungsbauteil eines Kraftfahrzeuges,
wobei ein Montageelement (11) am ersten Bauteil (10) angeordnet ist,
wobei ein Befestigungselement (21) am zweiten Bauteil (20) angeordnet ist,
und wobei das Montageelement (11) und das Befestigungselement (21) derart ausgebildet sind,
dass im zusammengebauten Zustand des ersten Bauteils (10) und des zweiten Bauteils (20) das Befestigungselement (21) mit dem Montageelement (11) in Wirkverbindung steht,
um eine Hauptverbindung (I) zwischen dem ersten Bauteil (10) und dem zweiten Bauteil (20) herzustellen,
**dadurch gekennzeichnet,**
**dass** im ersten Schritt (1) eine Hilfsverbindung (II) zwischen dem ersten Bauteil (10) und dem zweiten Bauteil (20) hergestellt wird, um das Lösen der Hauptverbindung (I) zwischen dem ersten Bauteil (10) und dem zweiten Bauteil (20) zu erleichtern,
wobei die Hilfsverbindung (II) mittels eines Demontagemittels (13) am Montageelement (11) und eines dem Demontagemittel (13) komplementären Führungsmittels (23) am Befestigungselement (21) hergestellt wird.

17. Verfahren nach Anspruch 16, **dadurch gekennzeichnet, dass** im zweiten Schritt (2) das zweite Bauteil (20) vom ersten Bauteil (10) abgezogen wird, wobei die Hilfsverbindung (II) zum geführten Abziehen des zweiten Bauteils (20) vom ersten Bauteil (10) dient.

18. Verfahren nach Anspruch 16 oder 17, **dadurch gekennzeichnet, dass** die Hauptverbindung (I) mittels eines Montagemittels (12) am Montageelement (11), insbesondere in Form einer Rastnase, und eines dem Montagemittel (12) komplementären Befestigungsmittels (22) am Befestigungselement (21), insbesondere in Form eines Schnapphakens, beispielsweise eines abgewinkelten Hakens, hergestellt wird, wobei insbesondere das Montagemittel (12) mit dem Befestigungsmittel (22) form- und/oder kraftschlüssig verbunden wird.

19. Verfahren nach einem der Ansprüche 16 bis 18, **dadurch gekennzeichnet, dass** die Hilfsverbindung (II) mittels des Demontagemittels (13) am Montageelement (11) in Form einer Führung, einer Führungsnut, einer Führungsschiene oder einer Führungskulisse; und mittels des dem Demontagemittel (13) komplementären Führungsmittels (23) am Befestigungselement (21) in Form eines, beispielsweise länglichen, Hakens, hergestellt wird, wobei insbesondere das Demontagemittel (13) mit dem Führungsmittel (23) form- und/oder kraftschlüssig verbunden wird.

## Claims

1. Arrangement for releasably connecting a first component (10) to a second component (20) - in particular, a body component to a trim component or one trim component to another trim component of a motor vehicle - having
an assembly element (11) which is arranged on the first component (10), and a fastening element (21) which is arranged on the second component (20),
wherein the assembly element (11) and the fastening element (21) are designed in such a way
that in the assembled state of the arrangement, the fastening element (21) is operatively connected to the assembly element (11)
in order to produce a main connection (I) between the first component (10) and the second component (20),
**characterized in that**
the assembly element (11) has a disassembly means (13), and the fastening element (21) has a guidance means (23) complementary to the disassembly means (13),
wherein the disassembly means (13) and the guidance means (23) are designed in such a way
that in the assembled state of the arrangement, the disassembly means (13) is spaced apart from the guidance means (23),
and that the disassembly means (13) can be brought into operative connection with the guidance means (23) - in particular, only then -
in order to create an auxiliary connection (II) between the first component (10) and the second component (20),
and in order to facilitate release of the main connection (I) between the first component (10) and the second component (20).

2. Arrangement according to Claim 1, **characterized in that** the fastening element is in the form of a snap-action hook.

3. Arrangement according to Claims 1 or 2, **characterized in that** the fastening element (21) can be positively and/or non-positively connected to the assembly element (11).

4. Arrangement according to any one of the preceding claims, **characterized in that** the assembly element (11) has an assembly means (12) - in particular, in the form of a latching lug - and the fastening element (21) has a fastening means (22) complementary to the assembly means (12) - in particular, in the form of a - for example, angled - hook, in order to create the main connection (I) between the first component (10) and the second component (20).

5. Arrangement according to Claim 4, **characterized in that** the assembly means (12) can be positively and/or non-positively connected to the fastening means (22).

6. Arrangement according to any one of the preceding claims, **characterized in that** the disassembly means (13) is designed in the form of a guide - in particular, in the form of a guide groove, a guide rail, or a guide slot - and the guidance means (23) is designed in the form of a - for example, elongated - hook.

7. Arrangement according to any one of the preceding claims, **characterized in that** the disassembly means (13) can be positively and/or non-positively connected to the guidance means (23).

8. Arrangement according to any one of Claims 4 to 7, **characterized in that** the direction of extension of the assembly means (12) is oriented to be perpendicular to the direction of extension of the disassembly means (13).

9. Arrangement according to any one of Claims 4 to 8, **characterized in that** the assembly element (11) has a platform (P) on which the disassembly means (13) is formed - in particular, elongated - wherein the direction of extension of the assembly means (12) is oriented to be perpendicular to the plane of the platform (P).

10. Arrangement according to any one of Claims 4 to 9, **characterized in that** the direction of extension of the fastening means (22) is oriented to be perpendicular to the direction of extension of the guidance means (23), and **that,** in particular, the guidance means (23) is formed on one side (L) of the fastening element (21) and **that** the fastening means (22) is formed on an opposite side (R) of the fastening element (21).

11. Arrangement according to any one of Claims 4 to 10, **characterized in that** the fastening element (21) has a resilient arm, at the upper end (E) of which the guidance means (23) is designed to be angled - in particular, angled by 90° - relative to the fastening means (22), wherein the direction of extension of the fastening means (22) is oriented to be perpendicular to the direction of extension of the arm, and wherein the direction of extension of the guidance means (23) is oriented to be parallel to the direction of extension of the arm.

12. Arrangement according to any one of Claims 4 to 11, **characterized in that,** in the assembled state of the arrangement, the direction of extension of the fastening means (22) of the fastening element (21) is oriented to be perpendicular to the plane of the platform (P) of the assembly element (11), wherein the direction of extension of the guidance means (23) of the fastening element (21) is oriented to be parallel to the platform (P) of the assembly element (11).

13. Arrangement according to any one of Claims 4 to 12, **characterized in that** the assembly element (11) is formed to be monolithic and/or materially-uniform with the assembly means (12) and/or the disassembly means (13), and **that,** in particular, the fastening element (21) is formed to be monolithic and/or materially-uniform with the fastening means (22) and/or the guidance means (23).

14. Arrangement according to any one of the preceding claims, **characterized in that** the assembly element (11) and/or the fastening element (21) is formed from a flexible material - in particular, from plastic - and **that,** in particular, the assembly element (11) and/or the snap-action hook (21) can be produced with the aid of an injection-molding method.

15. Arrangement according to any one of the preceding claims, **characterized in that** the first component (10) and/or the second component (20) has an access - in particular, in the form of an opening - in order to act on the fastening element (21) from outside the arrangement by means of a tool in order to release the main connection (I) between the first component (10) and the second component (20) and to produce an auxiliary connection (II) between the first component (10) and the second component (20).

16. Method for disassembling a second component (20) from a first component (10) - in particular, a trim component from a body component or one trim component from another trim component of a motor vehicle -
wherein an assembly element (11) is arranged on the first component (10),
wherein a fastening element (21) is arranged on the second component (20),
and wherein the assembly element (11) and the fastening element (21) are formed in such a way
that, in the assembled state of the first component (10) and of the second component (20), the fastening element (21) is operatively connected to the assembly element (11)
in order to create a main connection (I) between the first component (10) and the second component (20),
**characterized in that,**
in the first step (1), an auxiliary connection (II) is established between the first component (10) and the second component (20) in order to facilitate the release of the main connection (I) between the first component (10) and the second component (20),
wherein the auxiliary connection (II) is produced on the assembly element (11) by means of a disassembly means (13) and on the fastening element (21) by means of a guidance means (23) complementary to the disassembly means (13).

17. Method according to Claim 16, **characterized in that,** in the second step (2), the second component (20) is removed from the first component (10), wherein the auxiliary connection (II) serves to guide the removal of the second component (20) from the first component (10).

18. Method according to Claims 16 or 17, **characterized in that** the main connection (I) is produced on the assembly element (11) - in particular, in the form of a latching lug - by means of an assembly means (12), and on the fastening element (21) - in particular, in the form of a snap-action hook, e.g., an angled hook - by means of a fastening means (22) complementary to the assembly means (12), wherein, in particular, the assembly means (12) is positively and/or non-positively connected to the fastening means (22).

19. Method according to any one of Claims 16 to 18, **characterized in that** the auxiliary connection (II) is produced on the assembly element (11) in the form of a guide, a guide groove, a guide rail, or a guide slot by means of the disassembly means (13), and on the fastening element (21) in the form of a - for example, elongated - hook by means of the guidance means (23) complementary to the disassembly means (13), wherein, in particular, the disassembly means (13) is positively and/or non-positively connected to the guidance means (23).

## Revendications

1. Système de liaison séparable entre une première pièce (10) et une deuxième pièce (20), en particulier une pièce de carrosserie et une pièce de garnissage ou une pièce de garnissage et une autre pièce de garnissage d'un véhicule automobile, comprenant
un élément de montage (11), lequel est agencé sur la première pièce (10),
et un élément de fixation (21), lequel est agencé sur la deuxième pièce (20),
l'élément de montage (11) et l'élément de fixation (21) étant conçus de telle manière,
qu'à l'état assemblé du système, l'élément de fixation (21) est en liaison fonctionnelle avec l'élément de montage (11),
afin d'établir une liaison principale (I) entre la première pièce (10) et la deuxième pièce (20),
**caractérisé**
**en ce que** l'élément de montage (11) comprend un moyen de démontage (13) et l'élément de fixation (21) comprend un moyen de guidage (23) complémentaire du moyen de démontage (13),
le moyen de démontage (13) et le moyen de guidage (23) étant conçus de telle manière,
qu'à l'état assemblé du système, le moyen de démontage (13) est espacé du moyen de guidage (23),
et **en ce que** le moyen de démontage (13) ne peut être amené en liaison fonctionnelle avec le moyen de guidage (23) en particulier
que pour établir une liaison auxiliaire (II) entre la première pièce (10) et la deuxième pièce (20),
et pour faciliter la séparation de la liaison principale (I) entre la première pièce (10) et la deuxième pièce (20).

2. Système selon la revendication 1, **caractérisé en ce que** l'élément de fixation est conçu sous la forme d'un crochet d'encliquetage.

3. Système selon la revendication 1 ou 2, **caractérisé en ce que** l'élément de fixation (21) peut être lié à l'élément de montage (11) par coopération de formes et/ou de force.

4. Système selon l'une quelconque des revendications précédentes, **caractérisé en ce que** l'élément de montage (11) comprend un moyen de montage (12), en particulier sous la forme d'un bec d'encliquetage, et l'élément de fixation (21) comprend un moyen de fixation (22) complémentaire du moyen de montage (12), en particulier sous la forme d'un crochet, par exemple coudé, afin d'établir la liaison principale (I) entre la première pièce (10) et la deuxième pièce (20).

5. Système selon la revendication 4, **caractérisé en ce que** le moyen de montage (12) peut être lié au moyen de fixation (22) par coopération de formes et/ou de force.

6. Système selon l'une quelconque des revendications précédentes, **caractérisé en ce que** le moyen de démontage (13) est conçu sous la forme d'un guide, en particulier sous la forme d'une fente de guidage, d'un rail de guidage ou d'une coulisse de guidage et le moyen de guidage (23) est conçu sous la forme d'un crochet, par exemple allongé.

7. Système selon l'une quelconque des revendications précédentes, **caractérisé en ce que** le moyen de démontage (13) peut être lié au moyen de guidage (23) par coopération de formes et/ou de force.

8. Système selon l'une quelconque des revendications 4 à 7, **caractérisé en ce que** la direction d'extension du moyen de montage (12) est orientée perpendiculaire à la direction d'extension du moyen de démontage (13).

9. Système selon l'une quelconque des revendications 4 à 8, **caractérisé en ce que** l'élément de montage (11) comprend une plateforme (P), sur laquelle le moyen de démontage (13) est conçu, en particulier allongé, la direction d'extension du moyen de montage (12) étant orientée perpendiculaire au plan de la plateforme (P).

10. Système selon l'une quelconque des revendications 4 à 9, **caractérisé en ce que** la direction d'extension du moyen de fixation (22) est orientée perpendiculaire à la direction d'extension du moyen de guidage (23) et **en ce que,** en particulier, le moyen de guidage (23) est conçu sur un côté (L) de l'élément de fixation (21) et **en ce que** le moyen de fixation (22) est conçu sur un côté opposé (R) de l'élément de fixation (21).

11. Système selon l'une quelconque des revendications 4 à 10, **caractérisé en ce que** l'élément de fixation (21) comprend un bras élastique, sur l'extrémité supérieure (E) duquel le moyen de guidage (23) est conçu coudé, en particulier coudé à 90°, par rapport au moyen de fixation (22), la direction d'extension du moyen de fixation (22) étant orientée perpendiculaire à la direction d'extension du bras et la direction d'extension du moyen de guidage (23) étant orientée parallèle à la direction d'extension du bras.

12. Système selon l'une quelconque des revendications 4 à 11, **caractérisé en ce que,** à l'état assemblé du système, la direction d'extension du moyen de fixation (22) de l'élément de fixation (21) est orientée perpendiculaire au plan de la plateforme (P) de l'élément de montage (11), la direction d'extension du moyen de guidage (23) de l'élément de fixation (21) étant orientée parallèle à la plateforme (P) de l'élément de montage (11).

13. Système selon l'une quelconque des revendications 4 à 12, **caractérisé en ce que** l'élément de montage (11) est conçu de manière monolithique et/ou en une seule matière avec le moyen de montage (12) et/ou le moyen de démontage (13) et **en ce que,** en particulier, l'élément de fixation (21) est conçu de manière monolithique et/ou en une seule matière avec le moyen de fixation (22) et/ou le moyen de guidage (23).

14. Système selon l'une quelconque des revendications précédentes, **caractérisé en ce que** l'élément de montage (11) et/ou l'élément de fixation (21) sont conçus en un matériau flexible, en particulier en plastique, et **en ce que,** en particulier, l'élément de montage (11) et/ou le crochet d'encliquetage (21) peuvent être fabriqués à l'aide d'un procédé de moulage par injection.

15. Système selon l'une quelconque des revendications précédentes, **caractérisé en ce que** la première pièce (10) et/ou la deuxième pièce (20) comprennent un accès, en particulier sous la forme d'une ouverture, afin de pouvoir agir depuis l'extérieur du système avec un outil sur l'élément de fixation (21), afin de séparer la liaison principale (I) entre la première pièce (10) et la deuxième pièce (20) et afin d'établir une liaison auxiliaire (II) entre la première pièce (10) et la deuxième pièce (20).

16. Procédé de démontage d'une deuxième pièce (20) depuis une première pièce (10), en particulier une pièce de garnissage depuis une pièce de carrosserie ou une pièce de garnissage depuis une autre pièce de garnissage d'un véhicule automobile,
un élément de montage (11) étant agencé sur la première pièce (10),
un élément de fixation (21) étant agencé sur la deuxième pièce (20),
et l'élément de montage (11) et l'élément de fixation (21) étant conçus de telle manière,
qu'à l'état assemblé de la première pièce (10) et de la deuxième pièce (20), l'élément de fixation (21) est en liaison fonctionnelle avec l'élément de montage (11),
afin d'établir une liaison principale (I) entre la première pièce (10) et la deuxième pièce (20),
**caractérisé**
**en ce que** dans une première étape (1) une liaison auxiliaire (II) est établie entre la première pièce (10) et la deuxième pièce (20), afin de faciliter la séparation de la liaison principale (I) entre la première pièce (10) et la deuxième pièce (20),
la liaison auxiliaire (II) étant établie au moyen d'un moyen de démontage (13) sur l'élément de montage (11) et d'un moyen de guidage (23), sur l'élément de fixation (21), complémentaire du moyen de démontage (13).

17. Procédé selon la revendication 16, **caractérisé en ce que** dans une deuxième étape (2) la deuxième pièce (20) est retirée de la première pièce (10), la liaison auxiliaire (II) servant à retirer de manière guidée la deuxième pièce (20) de la première pièce (10).

18. Procédé selon la revendication 16 ou 17, **caractérisé en ce que** la liaison principale (I) est établie au moyen d'un moyen de montage (12) sur l'élément de montage (11), en particulier, sous la forme d'un bec d'encliquetage et d'un moyen de fixation (22), sur l'élément de fixation (21), complémentaire du moyen de montage (12), en particulier sous la forme d'un crochet d'encliquetage, par exemple d'un crochet coudé, le moyen de montage (12) étant en particulier relié au moyen de fixation (22) par coopération de formes et/ou de force.

19. Procédé selon l'une quelconque des revendications 16 à 18, **caractérisé en ce que** la liaison auxiliaire (II) est établie au moyen d'un moyen de démontage (13) sur l'élément de montage (11) sous la forme d'un guide, d'une fente de guidage, d'un rail de guidage ou d'une coulisse de guidage ; et au moyen du moyen de guidage (23), sur l'élément de fixation (21), complémentaire du moyen de démontage (13), en particulier sous la forme d'un crochet par exemple allongé, le moyen de démontage (13) étant en particulier relié au moyen de guidage (23) par coopération de formes et/ou de force.
